# EUROPÄISCHE PATENTSCHRIFT

(11) **EP 0 935 035 B1**
(45) Veröffentlichungstag und Bekanntmachung des Hinweises auf die Patenterteilung: **07.05.2003**
(21) Anmeldenummer: 99102477.9
(22) Anmeldetag: 09.02.1999
(51) Int. Cl.: E04D 5/10, E04D 5/14

(54) **Selbstklebende Materialbahn**
Self-adhesive web material
Bande auto-adhésive

(30) Priorität: 09.02.1998 DE 19804875; 09.04.1998 DE 29806536 U
(43) Veröffentlichungstag der Anmeldung: 11.08.1999
(73) Patentinhaber: Wirz, Peter, 53721 Siegburg (DE)
(72) Erfinder: Wirz, Peter, 53721 Siegburg (DE)
(74) Vertreter: Müller-Gerbes, Margot, Dipl.-Ing.

(56) Entgegenhaltungen:
- DE-A- 2 225 358
- DE-A- 4 238 541
- DE-A- 4 243 012
- GB-A- 2 289 436
- US-A- 3 152 035
- US-A- 4 529 625

## Beschreibung

Die Erfindung betrifft eine selbstklebende Materialbahn, vorzugsweise für den Einsatz im Baubereich, beispielsweise zu Erstellung von Abdichtungen im Steil-/Flachdachbereich bei Fenstern, Kaminen etc.

Aus der DE-PS 22 25 358 ist ein vorgefertigtes bogen- oder bahnförmiges Abdeckmaterial bekannt, welches eine Abdeckschicht aus einer Bitumen/Kautschukmasse mit nichtklebender Oberfläche auf einer Seite und einer selbstklebenden Bitumen/Kautschukmasse auf der anderen Seite aufweist. Eine Verstärkungsschicht ist in eine der Schichten eingelagert oder zwischen den Schichten angeordnet, wobei die Verstärkungsschicht aus einer gestreckten oder perforierten Metallschicht besteht. Auch ist bereits ein bahnförmiges Abdeckmaterial mit einer selbstklebenden Schicht und einer Verstärkungsschicht auf Basis von Streckmetall vorgeschlagen worden. Nachteilig bei allen diesen bekannten Abdeckmaterialien ist es, daß sie zum einen bedingt durch die Verstärkungsschicht auf Metall- bzw. Streckmetallbasis sehr hohe Herstellkosten verursachen und zum anderen nur begrenzt plastisch verformbar sind. Hierdurch wird die Verlegung der Abdeckmaterialien im Baubereich, insbesondere an schwer zugänglichen Stellen unnötig erschwert und eine faltenfreie Verlegung über längere Abschnitte gestaltet sich schwierig.

Die Erfindung hat sich daher die Aufgabe gestellt, eine selbstklebende Materialbahn der eingangs genannten Art vorzuschlagen, die zum einen in weiten Grenzen elastisch verformbar sein soll, so daß die Verlegung auch an schwer zugänglichen Stellen und über längere Abschnitte vereinfacht wird und zum anderen bei verringerten Kosten herstellbar ist.

Diese Aufgabe wird erfindungsgemäß mit einer selbstklebenden Materialbahn gemäß den Merkmalen des Patentanspruches 1 gelöst.

Vorteilhafte Ausgestaltungen der Erfindung sind den Unteransprüchen entnehmbar.

Zur Lösung der gestellten Aufgabe schlägt die Erfindung eine selbstklebende Materialbahn vor, die aus folgenden Komponenten besteht:
a) einem mindestens in einer Richtung elastisch reckbaren Trägermaterial mit mehrschichtigem Aufbau, bei dem eine Schicht aus einer elastischen und flexiblen Trägerfolie gebildet ist und zumindest auf einer Seite der Trägerfolie als weitere Schicht eine mit der Trägerfolie unter Ausbildung von Hohlräumen verbundene Vliesbahn vorgesehen ist, wobei die Vliesbahn mittels Thermobonding oder Ultraschallschweißen in punkt- und/oder linienförmigen Bereichen mit der Trägerfolie verbunden ist und
b) einer zumindest auf einer Seite des Trägermaterials außenseitig aufgebrachten selbstklebenden und verformbaren Schicht aus einem Haftklebemittel.

Die im Rahmen der Erfindung eingesetzten Trägermaterialien mit einem mehrschichtigen Aufbau aus einer Trägerfolie und an der Trägerfolie befestigten Vliesbahn sind im Prinzip bekannt und werden beispielsweise für die Herstellung von Windeln und ähnlichen Hygieneartikeln verwendet. Je nach Ausführungsform ist dabei nur auf einer Seite der Trägerfolie eine Vliesbahn vorgesehen oder die Trägerfolie ist auf ihren beiden Seiten mit je einer Vliesbahn verbunden und so zwischen diesen eingebettet.

Beispiele für die Herstellung eines derartigen im Rahmen der Erfindung als Trägermaterial eingesetzten Verbundmaterials sind in der DE 196 04 956 A1, DE 42 43 012 C2 und DE 42 38 541 A1 angegeben. Die Befestigung der Vliesbahnen an der Trägerfolie unter Ausbildung von Hohlräumen wird im wesentlichen dadurch erreicht, daß die Vliesbahnen im Gegensatz zur Trägerfolie eine verringerte bis gar keine Elastizität aufweisen. Beispielsweise die Vliesbahnen werden vor der Verbindung in mindestens einer Richtung gereckt werden. Nach dem Verbinden der Vliesschichten mit der Trägerfolie und Entspannen des so gebildeten Verbundes verbleiben die Vliesbahnen in ihrer gereckten Länge, wodurch sie sich zwischen den Verbindungspunkten wellen und aufwerfen und hierbei die Hohlräume ausgebildet werden. Diese bekannten Verbundmaterialien werden bisher - wie bereits erwähnt - vornehmlich zur Herstellung von Windeln und ähnlichem Hygienematerial eingesetzt, wobei diese Verbundmaterialien eine besonders hohe und gut kontrollierbare Elastizität aufweisen, die beim Erreichen einer vorbestimmbaren Reckung selbsttätig begrenzt wird, so daß die Reißdehnungsgrenze im Normalfall nicht erreicht wird. Anstelle einer Reckung der Vliesbahnen ist selbstverständlich auch eine Reckung der elastischen Trägerfolie vor der Verbindung mit den Vliesbahnen und nachfolgendes Entspannen des Verbundes oder eine Reckung und nachfolgende Entspannung des gesamten Verbundes möglich, um die vorangehend beschriebenen wellenförmigen Aufwerfungen der Vliesbahnen im Vergleich zum geradlinigem Verlauf der Trägerfolie zu erzielen.

Im Rahmen der Erfindung wurde nunmehr gefunden, daß diese aus der Windelherstellung bekannten Verbundmaterialien mit großem Vorteil als Trägermaterial für eine selbstklebende Materialbahn der eingangs genannten Art einsetzbar sind und sie problemlos auf einer oder beiden Seiten mit einer selbstklebenden und elastisch verformbaren Schicht aus einem Haftklebemittel versehen werden können. Die hierdurch gewonnene selbstklebende Materialbahn gemäß der Erfindung weist eine hohe mechanische Festigkeit auf, die denen der bekannten Abdeckbänder mit Metall- oder Streckmetall-Verstärkung vergleichbar ist, wobei jedoch die erfindungsgemäße selbstklebende Materialbahn durch die hohe Elastizität des Trägermaterials besonders leicht auch in schwer zugängliche Ecken oder über längere Verlegestrecken faltenfrei verlegt werden kann, was insbesondere für die Erstellung von Abdichtungen im Baubereich von Vorteil ist.

Die erfindungsgemäße selbstklebende Materialbahn zeichnet sich von daher durch eine besonders gute Verarbeitbarkeit aus und kann je nach Bedarf z. B. in Form von selbstklebenden Dichtungsbändern konfektioniert werden.

Mit der Erfindung gelingt es, eine selbstklebende Materialbahn zu schaffen, die zumindest in einer Richtung um mindestens 15 %, bezogen auf die Ausgangsform reckbar ist.

Je nach Anwendungsfall kann die selbstklebende und elastisch verformbare Schicht der erfindungsgemäßen selbstklebenden Materialbahn lediglich auf einer Seite des Trägermaterials außenseitig auf die dort ausgebildete Vliesbahn oder auf beiden Seiten des Trägermaterials aufgebracht sein.

Als geeignete selbstklebende und elastisch verformbare Haftklebemittel im Sinne der Erfindung werden insbesondere Natur- und Synethese-Kautschuke, Polyacrylate, Polyester, Polychloroprene, Polyisobutene, Polyvinylether, Polyolefine und Polyurethane als geeignet angesehen. Diese Haftklebemittel können bei Bedarf in Kombination mit Zusätzen wie Harzen, Bitumen, Weichmachern und/oder Antioxydantien zur Ausbildung der selbstklebenden und elastisch verformbaren Schicht für die erfindungsgemäße selbstklebende Materialbahn verwendet werden.

Insbesondere für die Anwendung im Baubereich wird hohe Witterungsbeständigkeit gefordert, so daß die selbstklebende Schicht bevorzugt auf Basis von Bitumen und/oder eines Butylkautschuks gebildet ist. Bevorzugt ist eine Modifikation der bituminösen Ausgangsbasis mittels Polyolefinen, wodurch die erfindungsgemäße selbstklebende Materialbahn über einen weiten Temperaturbereich elastisch verformbar und temperaturbeständig eingestellt wird, so daß sie beispielsweise in einem Temperaturbereich von -20 °C bis +100 °C temperaturbeständig ist. Des weiteren wird durch den Zusatz von Polyolefinen zum Bitumen die Plastizität und das thermomechanische Verhalten des Bitumens erhöht.

Die selbstklebende Schicht wird gemäß einer Ausführungsform der Erfindung in einer Dicke von 1 bis 10 mm auf das Trägermaterial aufgebracht, so daß eine ausreichende Klebekraft der erfindungsgemäßen selbstklebenden Materialbahn gewährleistet ist.

Als weiterer wesentlicher Vorteil der erfindungsgemäß vorgeschlagenen selbstklebenden Materialbahn mit einem Trägermaterial mit Trägerfolie und unter Ausbildung von Hohlräumen an der Trägerfolie befestigten Vliesbahnen wurde darüber hinaus festgestellt, daß die hohe Elastizität des Trägermaterials zwar eine leichte Verlegbarkeit der erfindungsgemäßen selbstklebenden Materialbahn gewährleistet, gleichzeitig aber die Elastizität beim Erreichen einer vorbestimmten Dehnung abrupt beendet wird, nämlich dann, wenn die vorgereckten Vliesbahnen wieder ihre ursprüngliche Reckdehnung, in der sie bei der Herstellung des Trägermaterials plastisch verblieben sind, erreichen. Diese Begrenzung der Dehnbarkeit ermöglicht es, daß die Elastizität der erfindungsgemäßen selbstklebenden Materialbahn nur in einem solchen Bereich zugelassen wird, in der auch die aufgebrachte selbstklebende und elastisch verformbare Schicht aus Haftklebemittel elastisch dehnbar ist, so daß es nicht zu Ablösungen der Verbindung zwischen dem Trägermaterial und der selbstklebenden Schicht der erfindungsgemäßen selbstklebenden Materialbahn bei der Verlegung kommen kann. Das Trägermaterial ist aufgrund des wellenförmigen Verlaufs der Vliesbahnen elastisch dehnbar, jedoch nur soweit, bis der wellenförmige Verlauf infolge der Dehnung in einen geradlinigen, gestreckten Verlauf der Vliesbahnen überführt wird und eine weitere Dehnung durch die Vliesbahnen verhindert wird.

Zur weiteren Steigerung der leichten Handhabung der erfindungsgemäßen selbstklebenden Materialbahn kann gemäß einer vorteilhaften Ausführungsform der Erfindung vorgesehen sein, daß auf die selbstklebende Schicht ein abziehbarer Abdeckstreifen aus einer Kunststoffolie oder einem silikonisierten Papier aufgebracht ist, der vor der Verlegung der erfindungsgemäßen Materialbahn abgezogen wird.

Eine bevorzugte Ausführungsform der Erfindung sieht darüber hinaus vor, daß die Vliesbahnen des Trägermaterials einen mäanderförmigen Verlauf aufweisen und bereichsweise mit der Trägerfolie verbunden sind. Durch diesen mäanderförmigen Verlauf erhält das Trägermaterial eine besonders hohe Elastizität, die beim Erreichen einer vorbestimmten Dehnung abrupt von den Vliesbahnen beendet wird.

Die Trägerfolie des Trägermaterials der erfindungsgemäßen selbstklebenden Materialbahn ist vorteilhaft aus einem gummielastischen thermoplastischen Elastomer hergestellt. Beispielsweise kann die Trägerfolie aus einem Polyethylen/Polyethylen-Copolymerisat oder aus Block-Copolymeren des Typs A - B - A' hergestellt sein. Hierbei beträgt die Dicke der Trägerfolie vorteilhaft 0,01 bis 0,08 mm.

Die Vliesbahnen des Trägermaterials der erfindungsgemäßen selbstklebenden Materialbahn sind vorteilhaft auf Basis von Polyolefinen, wie Polypropylen oder eines Polyesters hergestellt. Hierbei können nach unterschiedlichen Verfahren hergestellte Vliese beliebig verwendet werden, wie Vliese aus Endlosfilamenten oder solche aus schmelzgeblasenen Mikrofasern.

Sofern die erfindungsgemäße selbstklebende Materialbahn beispielsweise im Baubereich an Stellen eingesetzt wird, an denen sie dem Zutritt von Sonnenlicht ausgesetzt ist, kann es zur Schaffung einer ausreichenden Alterungsbeständigkeit vorgesehen sein, die erfindungsgemäße selbstklebende Materialbahn mit geeigneten Zusätzen UV-beständig auszurüsten.

Die Erfindung wird nachfolgend anhand eines Ausführungsbeispieles in der Zeichnung näher erläutert. Es zeigen
- Figur 1: einen Schnitt durch eine erfindungsgemäße selbstklebende Materialbahn,
- Figur 2: in perspektivischer Darstellung die selbstklebende Materialbahn gemäß Figur 1,
- Figur 3: einen Schnitt durch die selbstklebende Materialbahn in gerecktem Zustand.

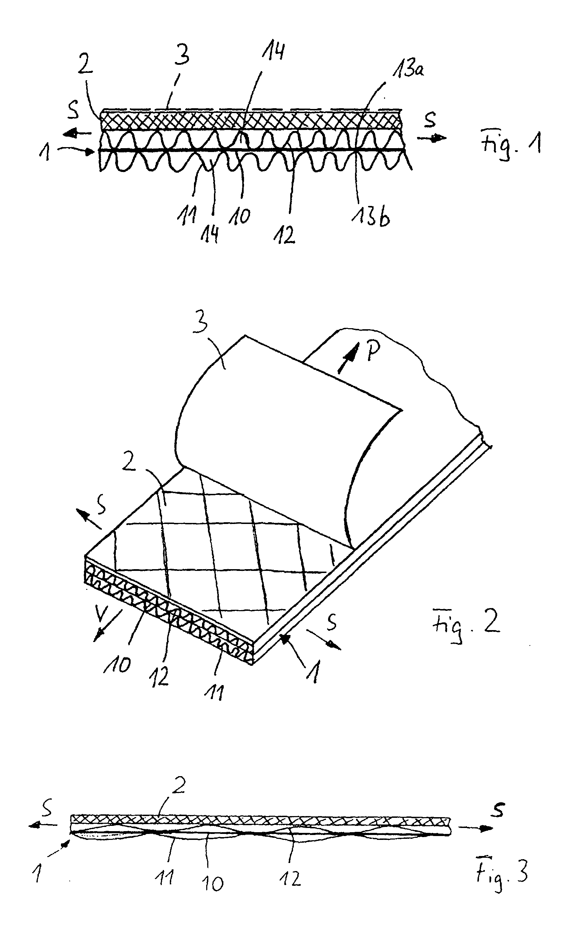

Die in der Figur 1 dargestellte selbstklebende Materialbahn umfaßt ein Trägermaterial 1 und eine auf einer Seite des Trägermaterials 1 aufgebrachte selbstklebende Schicht 2, auf der ein abziehbarer Abdeckstreifen 3 aufgelegt ist.

Das Trägermaterial 1 ist in Pfeilrichtung S und V, siehe auch Figur 2, elastisch reckbar und weist einen mehrschichtigen, hier dreischichtigen Aufbau auf. Als innere Schicht ist eine elastische und flexible Trägerfolie 10 vorgesehen, die beispielsweise aus einem thermoplastischen Elastomer, wie einem PE/PE-Copolymerisat in einer Dicke von 0,04 mm ausgebildet ist. Die äußeren Schichten des Trägermaterials 1 werden jeweils von einer mit der Trägerfolie 10 unter Ausbildung von in Längserstreckung des Trägermaterials 1 durchgängig verlaufenden Hohlräumen 14 verbundenen Vliesbahn 11, 12 beispielsweise aus Endlosfilamenten auf Basis von Polypropylen oder eines Polyesters gebildet. Die Vliesbahnen 11, 12 sind mittels bereichsweise angebrachter Punktschweißungen 13a, 13b nach dem sogenannten Thermobondingverfahren mit der Trägerfolie 10 verbunden, wobei die Vliesbahnen einen mäanderförmigen Verlauf aufweisen und unter Ausbildung von Hohlräumen mit der Trägerfolie 10 verbunden sind.

Die Herstellung eines derartigen Trägermaterials 1 ist beispielsweise in der bereits erwähnten DE 42 38 541 A1 beschrieben.

Die selbstklebende Schicht 2 ist im vorliegenden Ausführungsbeispiel in einer Dicke von etwa 2 mm einseitig auf die Vliesbahn 12 des Trägermaterials 1 aufgebracht und kann beispielsweise aus einem für Verklebungen im Baubereich geeigneten Butylkautschuk oder aus mit Polyolefinen modifiziertem Bitumen gebildet sein. Diese selbstklebende Schicht 2 ist in dem im Baubereich auftretenden Temperaturbereich gut verarbeitbar und auch auf Dauer beständig und besitzt eine gewisse elastische Verformbarkeit bei homogener Oberfläche.

Auf der selbstklebenden Schicht 2 ist zu deren Schutz und zur leichteren Verarbeitbarkeit ein Abdeckstreifen 3 aus einem silikonisierten Papier aufgebracht, der vor dem Verkleben abgezogen wird, siehe Pfeil P in Figur 2.

Insgesamt wird somit eine selbstklebende Materialbahn erhalten, die, wie aus der Figur 2 ersichtlich, beispielsweise zur Abdichtung von Fugen oder dergleichen im Baubereich in Bahnform geschnitten vorgefertigt werden kann und aufgrund der elastischen Materialeigenschaften des Trägermaterials 1 und auch der auf diesen Trägermaterial 1 aufgebrachten selbstklebenden Schicht 2 sowohl in der mit Pfeilrichtung S gekennzeichneten Richtung wie auch in der mit Pfeilrichtung V gekennzeichneten Richtung elastisch verformbar ist. Durch diese elastische Verformbarkeit wird die Verlegung der selbstklebenden Materialbahn beispielsweise im Baubereich an schwer zugänglichen Stellen oder auch über längere Abschnitte wesentlich vereinfacht. Eventuell sich bei der Verlegung bildende Falten können einfach durch Andrücken und entsprechende Dehnung der Materialbahn ausgeglichen werden.

Durch den bereits beschriebenen mäanderförmigen Verlauf der Vliesbahnen 11, 12 des Trägermaterials 1 wird darüber hinaus eine Begrenzung der hohen Elastizität der selbstklebenden Materialbahn in vorteilhafter Weise erreicht, was anhand eines Vergleiches der Figuren 1 und 3 ersichtlich ist.

Die selbstklebende Materialbahn ist in der Figur 1 in entspanntem Zustand dargestellt. Zum Verlegen dieser Materialbahn, beispielsweise zum Abdichten von Fugen im Baubereich wird gemäß Figur 2 der auf der Oberfläche der selbstklebenden Schicht 2 aufgebrachte Abdeckstreifen 3 gemäß Pfeilrichtung P abgezogen, so daß die darunter befindliche selbstklebende Schicht 2 freigelegt wird und die Materialbahn entsprechend dem Anwendungsfall mit der selbstklebenden Schicht 2 auf der entsprechenden Unterlage befestigt werden kann.

Für den Fall, daß schwer zugängliche verwinkelte Bereiche mit der selbstklebenden Materialbahn abgedeckt werden sollen oder Falten während der Verlegung auftreten, können diese durch entsprechende Dehnung der Materialbahn in Pfeilrichtung V und vor allem in Pfeilrichtung S leicht ausgeglichen werden. Hierbei weist die selbstklebende Materialbahn zumindest in Pfeilrichtung S, vorzugsweise aber sowohl in Pfeilrichtung S und V, eine solche Elastizität auf, daß sie zumindest um 15 % bezogen auf ihre Ausgangsform reckbar ist.

Die von der selbstklebenden Schicht 2 erzeugbaren Klebkräfte sind ausreichend, um eine zufriedenstellende Haftung der selbstklebenden Materialbahn auf einer Unterlage herzustellen und gleichzeitig eine elastische Verformung und Dehnung der Materialbahn, z. B. zum Ausgleich von Falten auf Dauer aufrecht zu erhalten.

Die vorzugsweise als selbstklebende Schicht eingesetzten Haftklebemittel auf Basis von Bitumen und/oder eines Butylkautschuks weisen jedoch nur eine begrenzte Elastizität auf, deren Überschreiten von dem Trägermaterial 1 verhindert wird, wie aus Figur 3 ersichtlich. Bei einer Dehnung der selbstklebenden Materialbahn bis zu einem vorbestimmbaren Maß nähern sich die ursprünglich mäanderförmig verlaufenden Vliesbahnen 11, 12 mehr und mehr einer geradlinigen Erstreckung an, in der sie der weiteren Dehnung in Pfeilrichtung S einen größer werdenden Widerstand entgegensetzen, bis sie letztendlich eine weitere Dehnung in Pfeilrichtung S unterbinden. Hierdurch wird eine Überdehnung der einseitig auf das Trägermaterial 1 aufgebrachten selbstklebenden Schicht 2 und damit einer Ausdünnung oder einem Einreißen bzw. Ablösen der selbstklebenden Schicht 2 vom Trägermaterial 1 auf einfache Weise vorgebeugt. Auch in Pfeilrichtung V ist die Elastizität der Träger begrenzt, so daß auch hier schädliche Einflüsse auf die selbstklebende Schicht verhindert werden.

Die erfindungsgemäße selbstklebende Materialbahn eignet sich insbesondere für Abdichtungen im Baubereich, da sie leicht in Ecken gelegt und gedrückt werden kann, Falten von Hand ausdrückbar sind und sie von daher besonders einfach zu verarbeiten ist. Sie ist beispielsweise als bandförmiger Zuschnitt einsetzbar für alle Arten von Abdichtungen im Steil/Flachdachbereich, an Fenstern, Kaminen, zur Abdichtung von Fugen usw.

## Patentansprüche

1. Selbstklebende Materialbahn, bestehend aus
a) einem mindestens in einer Richtung elastisch reckbaren Trägermaterial (1) mit mehrschichtigem Aufbau, bei dem eine Schicht aus einer elastischen und flexiblen Trägerfolie (10) gebildet ist und zumindest auf einer Seite der Trägerfolie (10) als weitere Schicht eine mit der Trägerfolie (10) unter Ausbildung von Hohlräumen verbundene Vliesbahn vorgesehen ist, wobei die Vliesbahn mittels Thermobonding oder Ultraschallverschweißen in punkt- und/oder linienförmigen Bereichen mit der Trägerfolie (10) verbunden ist und
b) einer zumindest auf einer der Seite des Trägermaterials (1) außenseitig aufgebrachten selbstklebenden und verformbaren Schicht (2) aus einem Haftklebemittel.

2. Selbstklebende Materialbahn nach Anspruch 1, **dadurch gekennzeichnet, daß** das Trägermaterial dreischichtig ausgebildet ist, wobei je eine Vliesbahn (11, 12) unter Ausbildung von Hohlräumen (14) als äußere Schichten mit der Trägerfolie (10) als innere Schicht verbunden sind.

3. Selbstklebende Materialbahn nach Anspruch 1 oder 2, **dadurch gekennzeichnet, daß** sie zumindest in einer Richtung um mindestens 15 %, bezogen auf die Ausgangsform reckbar ist.

4. Selbstklebende Materialbahn nach Anspruch 1 bis 3, **dadurch gekennzeichnet, daß** die selbstklebende Schicht (2) auf Basis von Bitumen und/oder eines Butylkautschuks gebildet ist.

5. Selbstklebende Materialbahn nach einem der Ansprüche 1 bis 4, **dadurch gekennzeichnet, daß** die selbstklebende Schicht (2) in einer Dicke von 1 bis 10 mm auf das Trägermaterial (1) aufgebracht ist.

6. Selbstklebende Materialbahn nach einem der Ansprüche 1 bis 5, **dadurch gekennzeichnet, daß** auf die selbstklebende Schicht (2) ein abziehbarer Abdeckstreifen (3) aus einer Kunststoffolie oder silikonisiertem Papier aufgebracht ist.

7. Selbstklebende Materialbahn nach einem der Ansprüche 1 bis 6, **dadurch gekennzeichnet, daß** die Vliesbahnen (11, 12) des Trägermaterials (1) einen mäanderförmigen Verlauf aufweisen und bereichsweise mit der Trägerfolie (10) verbunden sind.

8. Selbstklebende Materialbahn nach einem der Ansprüche 1 bis 7, **dadurch gekennzeichnet, daß** die Trägerfolie (10) des Trägermaterials (1) aus einem gummielastischen thermoplastischen Elastomer gebildet ist.

9. Selbstklebende Materialbahn nach einem der Ansprüche 1 bis 8, **dadurch gekennzeichnet, daß** die Dicke der Trägerfolie (10) 0,01 bis 0,08 mm beträgt.

10. Selbstklebende Materialbahn nach einem der Ansprüche 1 bis 9, **dadurch gekennzeichnet, daß** die Vliesbahnen (11, 12) des Trägermaterials (1) auf Basis von Polyolefinen, wie Polypropylen oder eines Polyesters hergestellt sind.

11. Selbstklebende Materialbahn nach einem der Ansprüche 1 bis 10, **dadurch gekennzeichnet, daß** sie UV-beständig ausgerüstet ist.

## Claims

1. A self-adhesive web of material consisting of
a) a backing material (1) having a multilayer structure, elastically stretchable in at least one direction, in which one layer is formed by an elastic and flexible backing film (10) and a nonwoven web joined to the backing film (10) is provided as an additional layer on at least one side of the backing film (10), forming cavities, whereby the nonwoven web is bonded to the backing film (10) in spots and/or in linear areas by means of thermobonding or ultrasonic welding, and
b) a self-adhesive and deformable layer (2) of a contact adhesive applied to the outside on at least one side of the backing material (1).

2. The self-adhesive web of material according to Claim 1, **characterized in that** the backing material is designed in three layers, with one nonwoven web (11, 12) on each side being bonded as outer layers to the backing film (10) as the inner layer.

3. The self-adhesive web of material according to Claim 1 or 2, **characterized in that** it can be stretched by at least 15 %, based on the starting shape, in at least one direction.

4. The self-adhesive web of material according to Claims 1 through 3, **characterized in that** the self-adhesive layer (2) is formed on the basis of bitumen and/or a butyl rubber.

5. The self-adhesive web of material according to one of Claims 1 through 4, **characterized in that** the self-adhesive layer (2) is applied to the backing material (1) in a thickness of 1 to 10 mm.

6. The self-adhesive web of material according to one of Claims 1 through 5, **characterized in that** a removable covering strip (3) of a plastic film or siliconized paper is applied to the self-adhesive layer (2).

7. The self-adhesive web of material according to one of Claims 1 through 6, **characterized in that** the nonwoven webs (11, 12) of the backing material (1) have a meandering course and are connected to the backing film (10) in some areas.

8. The self-adhesive web of material according to one of Claims 1 through 7, **characterized in that** the backing film (10) of the backing material (1) is formed from a rubber elastic thermoplastic elastomer.

9. The self-adhesive web of material according to one of Claims 1 through 8, **characterized in that** the thickness of the backing film (10) is 0.01 mm to 0.08 mm.

10. The self-adhesive web of material according to one of Claims 1 through 9, **characterized in that** the nonwoven webs (11, 12) of the backing material (1) are manufactured on the basis of polyolefins, such as polypropylene or a polyester.

11. The self-adhesive web of material according to one of Claims 1 through 10, **characterized in that** it is provided with a UV-resistant finish.

## Revendications

1. Bande de matière autocollante, comprenant :
a) au moins une matière support (1) de structure multicouche étirable élastiquement au moins dans une direction, dont une couche est constituée de feuille support (10) élastique et souple et d'une bande de non-tissé prévue comme couche supplémentaire, raccordée à la feuille support (10) au moins sur une face de la feuille support (10) en formant des cavités, la bande de non tissé étant solidarisée à la feuille support (10) par collage thermique ou soudage par ultrasons en formant des zones en forme de points et/ou de lignes, et
b) une couche (2) d'adhésif autocollante et déformable appliquée extérieurement sur au moins l'une des faces de la matière support (1).

2. Bande de matière autocollante suivant la revendication 1, **caractérisé en ce que** la matière support comprend trois couches, une bande de non-tissé (11, 12) étant chaque fois reliée en tant que couche intérieure à la feuille support (10) en formant des cavités (14) donnant naissance à des couches extérieures.

3. Bande de matière autocollante suivant la revendication 1 ou 2, **caractérisée en ce qu'**elle est étirable à raison d'au moins 15 % par rapport à la forme initiale, du moins dans une direction.

4. Bande de matière autocollante suivant les revendications 1 à 3, **caractérisée en ce que** la couche autocollante (2) est fabriquée à base de bitume et/ou d'un caoutchouc butylique.

5. Bande de matière autocollante suivant l'une des revendications 1 à 4, **caractérisée en ce que** la couche auto-collante (2) est appliquée sur la matière support (1) en une épaisseur de 1 à 10 mm.

6. Bande de matière autocollante suivant l'une des revendications 1 à 5, **caractérisée en ce qu'**on applique sur la couche auto-collante (2) une bande de revêtement (3) pelable consistant en une feuille de matière plastique ou un papier siliconé.

7. Bande de matière autocollante suivant l'une des revendications 1 à 6, **caractérisée en ce que** les bandes de non-tissé (11, 12) de la matière support (1) présentent un tracé sinueux et sont reliées par endroits à la feuille support (10).

8. Bande de matière autocollante suivant l'une des revendications 1 à 7, **caractérisée en ce que** la feuille support (10) de la matière support (1) est faite à base d'un élastomère thermoplastique ayant l'élasticité du caoutchouc.

9. Bande de matière autocollante suivant l'une des revendications 1 à 8, **caractérisée en ce que** l'épaisseur de la feuille support (10) est de 0,01 à 0,08 mm.

10. Bande de matière autocollante suivant l'une des revendications 1 à 9, **caractérisée en ce que** les bandes de non-tissé (11, 12) de la matière support (1) sont fabriquées à base de polyoléfines comme le polypropylène, ou d'un polyester.

11. Bande de matière autocollante suivant l'une des revendications 1 à 10, **caractérisée en ce qu'**elle est mise au point pour résister aux UV.
